# EUROPÄISCHE PATENTSCHRIFT

(11) **EP 3 350 545 B1**
(45) Veröffentlichungstag und Bekanntmachung des Hinweises auf die Patenterteilung: **28.07.2021**
(21) Anmeldenummer: 16762762.9
(22) Anmeldetag: 01.09.2016
(51) Int. Cl.: G01D 4/04, G01D 5/244, G01D 5/245

(54) **LENKWINKELSENSOR MIT FUNKTIONELLER SICHERHEIT**
STEERING ANGLE SENSOR WITH FUNCTIONAL SECURITY
CAPTEUR D'ANGLE DE BRAQUAGE DOTÉ D'UNE SÉCURITÉ FONCTIONNELLE

(30) Priorität: 17.09.2015 DE 102015115686
(43) Veröffentlichungstag der Anmeldung: 25.07.2018
(73) Patentinhaber: Bourns, Inc., Riverside, CA 92507 (US)
(72) Erfinder: KLIMENKO, Valeri, 2274 Rabensburg (AT)
(74) Vertreter: von Bülow & Tamada
(86) Internationale Anmeldenummer: PCT/EP2016/070668
(87) Internationale Veröffentlichungsnummer: WO 2017/045930

(56) Entgegenhaltungen:
- EP-A1- 1 892 498
- DE-A1- 19 962 241
- DE-C1- 19 849 554
- JP-A- 2010 038 682

## Beschreibung

Die vorliegende Erfindung betrifft ein Verfahren zur Erkennung eines Fehlers in einem Winkelsensor, eine Steuervorrichtung zur Durchführung des Verfahrens, den Winkelsensor und ein Computerprogramm.

Aus der DE 198 49 554 C1 ist ein Winkelsensor zur Bestimmung der Winkellage einer Welle basierend auf einem Winkellagenunterschied zwischen einem durch die Welle angetriebenen ersten Abtriebsrad und einem durch die Welle angetriebenen zweiten Abtriebsrad bekannt. Der Winkelsensor umfasst das erste Abtriebsrad und das zweite Abtriebsrad. Das erste Abtriebsrad besitzt einen Durchmesser der sich von einem Durchmesser des zweiten Abtriebsrades unterscheidet.

Die Winkellage der Welle wird als übervoller Winkel, das heißt in einem 360° überschreitenden Wertebereich erfasst. Hierzu kann die Winkellage der Welle direkt bestimmt werden, indem die Winkellage eines der Abtriebsräder basierend auf dem Winkellagenunterschied bestimmt und mit dem Übersetzungsverhältnis zwischen der Welle und dem entsprechenden Antriebsrad multipliziert wird. In der direkt bestimmten Winkellage der Welle zeigen sich jedoch Nichtlinearitäten, die vor allem dadurch bedingt sind, dass Abtriebsräder nicht ideal rund sind und sich daher das Übersetzungsverhältnis in Abhängigkeit der Winkellage der Abtriebsräder ändert. Derartige winkellagenabhängige Änderungen des Übersetzungsverhältnisses sollen nachstehend als dynamische Änderungen des Übersetzungsverhältnisses bezeichnet werden.

Deshalb wird die Winkellage des Abtriebsrades als übervoller Winkel alternativ bestimmt. Hierzu wird die Winkellage des Abtriebsrades zunächst auf den letzten Vollwinkel bestimmt, der ein Vielfaches von 360° ist. So werden Messfehler durch das Abschneiden der Nachkommastellen gefiltert. Danach wird die Winkellage des Abtriebsrades als echter Winkel bestimmt, dessen Wert in einem Bereich zwischen 0° und 360° liegt. Abschließend wird die Winkellage des Abtriebsrades als übervoller Winkel durch Addieren des letzten Vollwinkels und des echten Winkels bestimmt. Zwar ist die alternativ bestimmte Winkellage des Abtriebsrades genauer als die direkt bestimmte Winkellage des Abtriebsrades, wenn jedoch im Bereich eines Vollwinkels Nachkommastellenfehler auftreten, kann es beim Abschneiden der Nachkommastellen passieren, dass der letzte Vollwinkel falsch bestimmt wird und sogenannte Sprünge in der Periodennummer auftreten. Die Periodennummer ist dabei ein Rundenzählwert, der angibt, wie viele Umdrehungen das Abtriebsrad bereits zurückgelegt hat.

Um diese Sprünge in der Periodennummer festzustellen, werden die direkt bestimmte Winkellage des Abtriebsrades und die alternativ bestimmte Winkellage des Abtriebsrades gegeneinander plausibilisiert. Die Auswirkungen der Sprünge in der Periodennummer auf die Winkellage des entsprechenden Abtriebsrades und damit auf die Winkellage der Welle lässt sich dann mit einer Periodennummer-Korrektur berichtigen.

Es zeigt sich jedoch, dass trotzt dieser Periodennummer-Korrektur weiterhin Sprünge in der Winkellage der Welle - sogenannte Winkelsprünge - auftreten. Derartige Winkelsprünge sind nicht nur problematisch, sie lassen sich auch nicht immer zuverlässig erkennen, beispielsweise wenn der Winkelsprung beim Einschalten des Sensors auftritt und keine Vergangenheitswerte der Winkellage der Welle zur Erkennung des Winkelsprunges vorhanden sind. JP 2010 038682 A zeigt einen weiteren bekannten Winkelsensor zur Bestimmung der Winkellage einer Welle basierend auf einem Winkellagenunterschied zwischen einem durch die Welle angetriebenen ersten Abtriebsrad und einem durch die Welle angetriebenen zweiten Abtriebsrad. Dabei wird eine Differenz der Winkellagen der beiden Abtriebsräder als Grundlage für eine Fehlererkennung verwendet.

Es ist Aufgabe der Erfindung, ein Verfahren zur Erkennung eines Fehlers in einem Winkelsensor anzugeben, mit dem die zuvor genannten Winkelsprünge zuverlässig erkannt werden können, selbst wenn keine Vergangenheitswerte zur Verfügung stehen. Gemäß einem Aspekt der Erfindung, umfasst ein Verfahren zur Erkennung eines Fehlers in einem Winkelsensor, der eingerichtet ist, die Winkellage einer Welle basierend auf einem Winkellagenunterschied zwischen einem durch die Welle angetriebenen ersten Abtriebsrad und einem durch die Welle angetriebenen zweiten Abtriebsrad zu bestimmen, die sich in ihrem Durchmesser unterscheiden, die Schritte Bestimmen eines Referenzwertes für die Winkellage der Welle basierend auf der Winkellage des ersten Abtriebsrades, Bestimmen eines Vergleichswertes für die Winkellage der Welle basierend auf der Winkellage des zweiten Abtriebsrades und einem Übersetzungsverhältnis zwischen dem ersten Abtriebsrad und dem zweiten Abtriebsrad, und Erkennen des Fehlers wenn eine Gegenüberstellung des Referenzwertes und des Vergleichswertes eine vorbestimmte Bedingung erfüllt.

Dem angegebenen Verfahren liegt die Überlegung zugrunde, dass die Periodensprünge der eingangs genannten Art durch nicht ideal linear erfasste Winkellagen der Abtriebsräder auftreten, die dann zu Sprüngen im Winkellagenunterschied führen und die eingangs genannte Periodennummer-Korrektur erforderlich machen. Diese nicht ideal linear erfassten Winkellagen sind analog zu den oben genannten dynamischen Änderungen des Übersetzungsverhältnisses ebenfalls dadurch bedingt, dass die Abtriebsräder nicht ideal rund sind. Durch die Periodennummer-Korrektur werden die dynamischen Änderungen des Übersetzungsverhältnisses im zeitlichen Mittel korrigiert.

Die Periodennummer-Korrektur setzt jedoch voraus, dass das Übersetzungsverhältnis zwischen den beiden Abtriebsrädern im zeitlichen Mittel gesehen konstant bleibt. Diese Voraussetzung kann jedoch nicht immer als gegeben angesehen werden, denn neben der nicht ideal erfassten Winkellage der Antriebsräder unterliegt der Winkelsensor auch grundsätzlich einer Alterung, durch die sich die mechanischen und elektrischen Komponenten verändern. Hierdurch werden das Übersetzungsverhältnis im zeitlichen Mittel und damit die gesamte Messstrecke zur Erfassung der Winkellage der Welle verändert. Die mathematischen Randbedingungen zur Bestimmung der Winkellage der Welle stimmen damit nicht mehr. Ändert sich das Übersetzungsverhältnis der beiden Abtriebsräder im Falle von Alterungs- und/oder Ermüdungserscheinungen langfristig werden daher die eingangs genannten Winkelsprünge ebenfalls hervorgerufen. Besonders problematisch kann dies sein, wenn der Winkelsensor nicht eingeschaltet ist und sich das Übersetzungsverhältnis zwischen den beiden Abtriebsrädern ändert. Dann kann beim Wiedereinschalten des Winkelsensors unmittelbar kein Winkelsprung erkannt werden, weil keine Vergleichswerte vorliegen. Dies ist beispielsweise bei einem Fahrzeug, das über einen längeren Zeitraum ohne elektrische Energiezufuhr abgestellt wird, der Fall.

Daher wird mit dem angegebenen Verfahren das Übersetzungsverhältnis zwischen den beiden Abtriebsrädern auf Langzeitveränderung hin überwacht. Hierzu wird nicht nur die Winkellage des ersten Abtriebsrades sondern auch die Lage des zweiten Abtriebsrades erfasst, weil hierdurch das Übersetzungsverhältnis zwischen den beiden Abtriebsrädern geprüft werden kann. Wenn die zuvor genannten mathematischen Randbedingungen bei der Bestimmung der Winkellage der Welle stimmen und keine Langzeitveränderungen des Übersetzungsverhältnisses aufgetreten sind, dann müssten Winkellagen der beiden Abtriebsräder redundant sein und sämtliche Berechnungen basierend darauf zu dem selben Ergebnis führen.

Durch eine vorbestimmte Bedingung für das Übersetzungsverhältnis zwischen den beiden Abtriebsrädern liegt ein Entscheidungskriterium vor, ab wann die Verhältnisse in der Messstrecke soweit verfälscht sind, dass eine ausreichend präzise Bestimmung der Winkellage der Welle nicht mehr gegeben ist. Da es sich bei dem Übersetzungsverhältnis zwischen den beiden Abtriebsrädern um eine Konstruktionsgröße handelt, kann die darauf basierende vorbestimmte Bedingung beispielsweise in Form von Vergleichswerten oder dergleichen in einem nichtflüchtigen Speicher wie einem ROM abgelegt und jederzeit, auch nach einem längeren Stillstand eines Fahrzeuges ohne Stromzufuhr abgerufen werden. Daher lassen sich die Winkelsprünge des Winkelsensors und damit ein Fehler stets erkennen.

In einer Weiterbildung des angegebenen Verfahrens werden zum Bestimmen des Referenzwertes ein basierend auf dem Winkellagenunterschied bestimmter Rundenzählwert für das erste Abtriebsrad und die Winkellage des ersten Abtriebsrades addiert. Zur Erfassung des Rundenzählwertes, der wie bereits erläutert, der oben genannten Periodennummer entspricht, ist keine hohe Präzision des zugrunde liegenden Sensorelementes notwendig. Einzig und allein im Bereich einer Vollumdrehung muss darauf geachtet werden, dass eindeutig auf eine neue Umdrehung oder Runde entschieden wird, damit bei der Messung der Winkellage des Abtriebsrades und damit der Welle keine Winkelsprünge entstehen.

In einer zusätzlichen Weiterbildung des angegebenen Verfahrens wird zum Bestimmen des Vergleichswertes eine Summe aus einem basierend auf dem Winkellagenunterschied bestimmten Rundenzählwert für das zweite Abtriebsrad und der Winkellage des zweiten Abtriebsrades durch Gewichten mit dem Übersetzungsverhältnis ein redundanter Referenzwert gebildet. Das heißt, dass die Winkellage des zweiten Abtriebsrades über das Übersetzungsverhältnis in die Lage des ersten Abtriebsrades umgerechnet wird. Das Übersetzungsverhältnis kann hierbei durch einen vorbestimmten Wert beschrieben werden, mit dem das Übersetzungsverhältnis bei der Konstruktion des Winkelsensors dimensioniert wurde. Die Gegenüberstellung des Referenzwertes und des so gebildeten Vergleichswertes kann nun wiederum auf die Erfüllung einer vorbestimmten Bedingung getestet werden. Wenn zur Gegenüberstellung beispielsweise beide Werte voneinander dividiert werden, so kann die vorbestimmte Bedingung erfüllt sein, wenn der Quotient zu weit von der eins entfernt ist.

Da eine Division rechentechnisch nur sehr aufwendig umzusetzen ist, umfasst die Gegenüberstellung in einer zweckmäßigen Weiterbildung des angegebenen Verfahrens die Bildung einer Differenz zwischen dem Referenzwert und dem Vergleichswert, wobei die vorbestimmte Bedingung erfüllt ist, wenn die gebildete Differenz einen vorbestimmten Wertebereich verlässt. Auf diese Weise kann mit einer einfachen Logikschaltung überwacht werden, ob die Gegenüberstellung die vorbestimmte Bedingung erfüllt, oder nicht.

In einer anderen Weiterbildung umfasst das angegebene Verfahren den Schritt Speichern der gebildeten Gegenüberstellung, vorzugsweise der Differenz, in einem Speicher. Auf diese Weise kann die Gegenüberstellung auch ausgewertet werden, um beispielsweise einen drohenden Verschleiß des Winkelsensors bei der Wartung eines Fahrzeuges zu erkennen, so dass der Winkelsensor noch vor einem Ausfall ausgetauscht werden kann.

Zwar kann die Gegenüberstellung grundsätzlich beliebig, beispielsweise über die Zeit, gespeichert werden, in einer besonders bevorzugten Weiterbildung des angegebenen Verfahrens umfasst die Gegenüberstellung die zuvor genannte Differenz und wird nur dann in dem Speicher gespeichert, wenn ein Betrag einer im Speicher hinterlegten Differenz kleiner ist, als ein Betrag der gebildeten Differenz. Auf diese Weise kann der zur Speicherung der Gegenüberstellung notwendige Speicherplatz auf ein Minimum reduziert werden.

In einer alternativen Weiterbildung des angegebenen Winkelsensors werden die Winkellagen der Abtriebsräder mit magnetoresitiven Sensoren mit jeweils zwei getrennten, je ein Gebersignal ausgebenden Messaufnehmern erfasst, wobei der Fehler des Winkelsensors ferner basierend auf einer relativen Lage der beiden Messaufnehmer in den jeweiligen Sensoren erfasst wird. Sind die beiden Messaufnehmer in einem Sensor jeweils um 90° versetzt um das entsprechende Abtriebsrad angeordnet, so kann die relative Lage der beiden Sensoren zweckmäßigerweise basierend auf der Orthogonalität der Gebersignale überwacht und bei fehlender Orthogonalität auf diesen Fehler entschieden werden. Auf diese Weise kann die Robustheit des Winkelsensors gegen Fehler weiter gesteigert werden.

Gemäß einem weiteren Aspekt der Erfindung ist eine Steuervorrichtung eingerichtet, eines der angegebenen Verfahren durchzuführen.

In einer Weiterbildung der angegebenen Vorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Winkelsensor zur Bestimmung der Winkellage einer Welle basierend auf einem Winkellagenunterschied zwischen einem durch die Welle angetriebenen ersten Abtriebsrad und einem durch die Welle angetriebenen zweiten Abtriebsrad, das erste Abtriebsrad, das zweite Abtriebsrad mit einem Durchmesser der sich von einem Durchmesser des ersten Abtriebsrades unterscheidet, und eine der angegebenen Steuervorrichtungen.

Gemäß einem weiteren Aspekt der Erfindung umfasst ein Computerprogramm Programmcodemittel, um alle Schritte des angegebenen Verfahrens durchzuführen, wenn das Computerprogramm auf einem elektronischen Gerät oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, das angegebene Verfahren durchführt.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 schematisch eine perspektivische Ansicht eines Fahrzeuges mit einem Lenksystem,
Fig. 2 schematisch eine perspektische Ansicht eines Lenkwinkelsensor für das Lenksystem aus Fig. 1,
Fig. 3 ein Diagramm, in dem die Winkel von Abtriebsrädern in dem Lenkwinkelsensor der Fig. 2 über einen Lenkwinkel des Lenkwinkelsystems der Fig. 1 aufgetragen sind,
Fig. 4 schematisch eine Steuervorrichtung in dem Lenkwinkelsensor der Fig. 2, und
Fig. 5 schematisch eine alternative Steuervorrichtung in dem Lenkwinkelsensor der Fig. 2.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

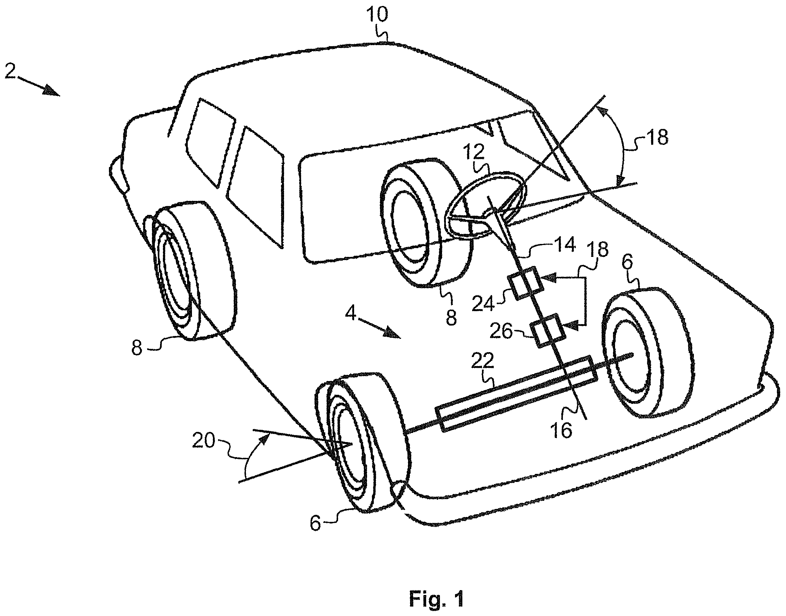

Es wird auf Fig. 1 Bezug genommen, die schematisch eine perspektivische Ansicht eines Fahrzeuges 2 mit einem Lenksystem 4 zeigt.

Das Fahrzeug 2 umfasst im vorliegenden Ausführungsbeispiel ein auf zwei Vorderrädern 6 und auf zwei Hinterrädern 8 getragenes Chassis 10. Die Vorderräder 6 können dabei über das Lenksystem 4 eingeschlagen werden, damit mit dem Fahrzeug 2 eine Kurve gefahren werden kann.

Das Lenksystem 4 umfasst ein Lenkrad 12, das auf eine Lenkwelle 14 aufgesetzt ist, die wiederum um eine Rotationsachse 16 drehbar angeordnet ist. Das Lenkrad 12 ist somit eingerichtet, basierend auf einem Lenkwellenwinkel 18 um die Rotationsachse 16 einen Lenkwinkel 20 vorzugeben, mit dem ein Lenkgetriebe 22 die Vorderräder 6 für die Kurvenfahrt einschlagen soll. Dazu wird das Lenkrad 12 beispielsweise von einem Fahrer des Fahrzeuges 2 gedreht.

Der Lenkwellenwinkel 18 wird in der vorliegenden Ausführung von einem Lenkwinkelsensor 24 erfasst. Mit dem erfassten Lenkwellenwinkel 18 betätigt dann eine Antriebsvorrichtung 26 das Lenkgetriebe 12 derart, dass die Vorderräder 6 des Fahrzeuges 2 gemäß mit dem entsprechenden Lenkwinkel 20 eingeschlagen werden.

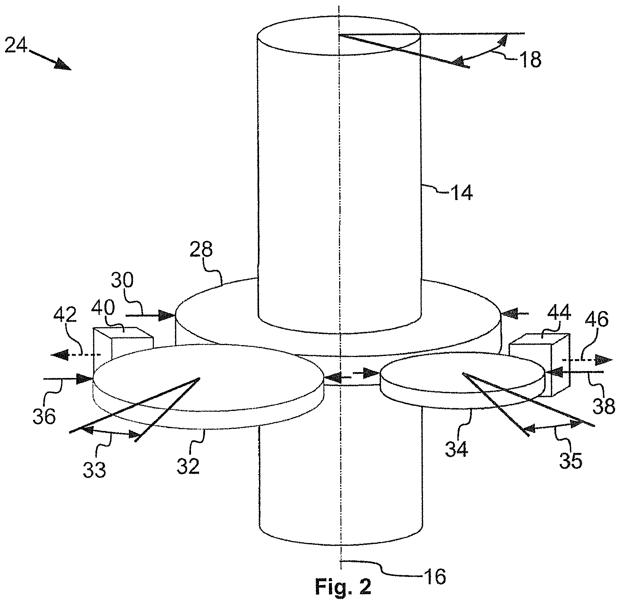

Es wird auf Fig. 2 Bezug genommen, die schematisch eine perspektische Ansicht des Lenkwinkelsensors 24 für das Lenksystem 4 aus Fig. 1 zeigt.

Der Lenkwinkelsensor 24 umfasst ein Antriebsrad 28 mit einem Antriebsraddurchmesser 30, das ortsfest und konzentrisch mit der Lenkwelle 14 verbunden ist und sich somit beim Drehen der Lenkwelle 14 ebenfalls um die Rotationsachse 16 dreht. Damit wird auch das Antriebsrad 28 mit dem Lenkwellenwinkel 18 eingestellt.

Zur messtechnischen Erfassung des Lenkwellenwinkels 18 treibt das Antriebsrad 28 bei seiner Drehung mit der Lenkwelle 14 ein erstes Abtriebsrad 32 und ein zweites Abtriebsrad 34 an, die umfänglich um das Antriebsrad 28 an verschiedenen Umfangspositionen angeordnet sind. Damit dreht die Lenkwelle 14 über das Antriebsrad 28 das erste Abtriebsrad 32 um einen ersten Abtriebsradwinkel 33 und das zweite Abtriebsrad 34 um einen zweiten Abtriebsradwinkel 35, wenn sie sich mit dem Lenkwellenwinkel 18 dreht.

Das erste Abtriebsrad 32 weist dabei einen ersten Abtriebsraddurchmesser 36 auf, der größer ist, als ein zweiter Abtriebsraddurchmesser 38 des zweiten Abtriebsrades 34. Beide Abtriebsraddurchmesser 36, 38 sind dabei kleiner als der Antriebsraddurchmesser 30. Folglich dreht sich das Antriebsrad 28 beim Drehen der Lenkwelle 14 am langsamsten und das zweite Abtriebsrad 34 am schnellsten.

Der Lenkwellenwinkel 18 kann nun über eine Gegenüberstellung der Abtriebsradwinkel 33, 35 der beiden Abtriebsräder 32, 34 in einem Winkelbereich erfasst werden, der über 360° hinausreicht - das heißt, der Lenkwellenwinkel 18 der Lenkwelle 14 kann über mehrere Vollwinkel erfasst werden. Zur Gegenüberstellung der Abtriebsradwinkel 33, 35 der beiden Abtriebsräder 32, 34 werden mit einem ersten Messaufnehmer 40 für den ersten Abtriebsradwinkel 33 erste echte Abtriebsradwinkelwerte 42 und für den zweiten Abtriebsradwinkel 35 mit einem zweiten Messaufnehmer 44 zweite echte Abtriebsradwinkelwerte 46 erfasst. Auf weitere Details zur Gegenüberstellung der Abtriebsradwinkel 33, 35 wird an einer späteren Stelle eingegangen.

Zur Erfassung der echten Abtriebsradwinkelwerte 42, 46 können die Abtriebsräder 32, 34 in an sich bekannter Weise in Umfangsrichtung encodiert sein, beispielsweise mit magnetischen Mitteln. Die beiden Messaufnehmer 40, 44 sind gegenüber dem Abtriebsrädern 32, 34 ortsfest angeordnet. Drehen sich die Abtriebsräder 32, 34 dann verändert sich dadurch die Encodierung aus Sicht des jeweiligen Messaufnehmers 40, 44, so dass diese ihre entsprechenden echten Abtriebsradwinkelwerte 42, 46 erfassen und in einem geeigneten Signal ausgeben. Da dies an sich bekannt ist, soll auf Details hierzu nicht weiter eingegangen werden.

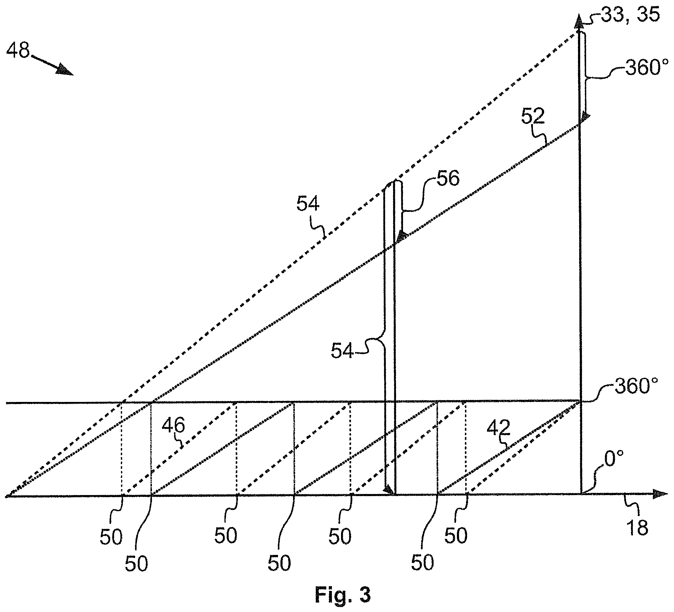

Die Gegenüberstellung der echten Abtriebsradwinkelwerte 42, 46 und die Bestimmung des Lenkwellenwinkels 18 daraus wird nachstehend anhand der Fig. 3 erläutert, die ein Diagramm 48 zeigt, in dem die Abtriebsradwinkelwerte 42, 46 des ersten Abtriebsradwinkel 33 und des zweiten Abtriebsradwinkels 35 über den Lenkwinkel 18 der Lenkwelle 14 aufgetragen sind.

Der Verlauf der ersten echten Abtriebsradwinkelwerte 42 ist dabei in gepunkteten Linien aufgetragen, während der Verlauf der zweiten echten Abtriebsradwinkelwerte 46 in gestrichelten Linien aufgetragen ist. Deutlich zu sehen ist, dass die echten Abtriebsradwinkelwerte 42, 46 messtechnisch bedingt stets bis zu einem Vollwinkel 50 von 360° ansteigen und dann bei 0° neu beginnen.

Der Übersichtlichkeit halber sind in dem Diagramm 48 der Verlauf des ersten Abtriebsradwinkels 33 als erste übervolle Abtriebsradwinkelwerte 52 und der Verlauf des zweiten Abtriebsradwinkels 35 als zweite übervolle Abtriebsradwinkelwerte 54 aufgetragen. Die übervollen Abtriebsradwinkelwerte 52, 54 geben ausgehend von einer in Fig. 2 nicht weiter angedeuteten Nullposition die Stellung des jeweiligen Abtriebsrades 32, 34 über einen Winkelbereich von mehr als 360° an, so dass aus den übervollen Abtriebsradwinkelwerten 52, 54 auch die Anzahl der Umdrehungen des jeweiligen Abtriebsrades 32, 34 ersichtlich ist.

Aus dem Diagramm 48 ist ersichtlich, dass sich das zweite Abtriebsrad 34 über den Lenkwinkel 18 gesehen schneller als das erste Abtriebsrad 32 dreht. Dies ist dadurch begründet, dass das erste Abtriebsrad 32 einen ersten Abtriebsraddurchmesser 36 aufweist, der größer ist, als der zweite Abtriebsraddurchmesser 38 des zweiten Abtriebsrades 34.

Wesentlich an dem Diagramm 48 der Fig. 3 ist, dass eine Differenz 56 zwischen den beiden übervollen Abtriebsradwinkelwerten 52, 54 eindeutig den beiden übervollen Abtriebsradwinkelwerten 52, 54 zugeordnet werden kann. In Fig. 3 ist beispielhaft eine Zuordnung zwischen einem der zweiten übervollen Abtriebsradwinkelwerte 54 und der bestimmten Differenz 56 angedeutet. Wenn somit die Differenz 56 bekannt ist, ist auch der übervolle Abtriebsradwinkelwert 52, 54 wenigstens einer der beiden Abtriebsräder 32, 34 bestimmbar.

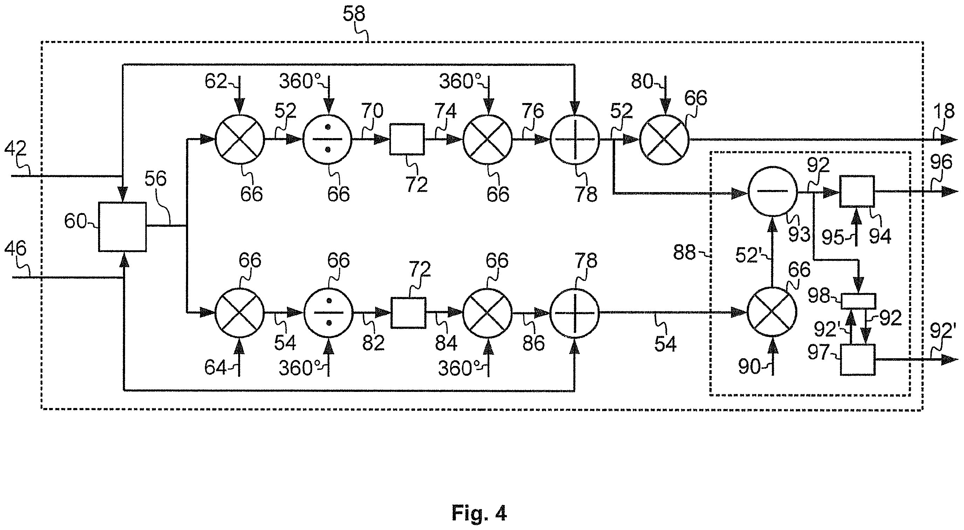

Die Differenz 56 kann grundsätzlich auch basierend auf den echten Abtriebsradwinkelwerten 42, 46 erfolgen, wobei hier berücksichtigt werden muss, dass die Differenz 56 zwischen positiven Werten und negativen Werten springt, wenn einer der beiden Abtriebsradwinkel 33, 35 einen Vollwinkel 50 überschreitet. Dies ist beispielsweise in der DE 198 49 554 C1 beschrieben. Diese Wertsprünge können jedoch beispielsweise durch Bildung des Absolutbetrags der Differenz 56 berücksichtigt werden. Die Differenz 56 und damit der übervolle Abtriebsradwinkelwert 52, 54 eines der beiden Abtriebsräder 32, 34 kann somit allein basierend auf den beiden Messaufnehmern 40, 44 bestimmt werden, die die echten Abtriebsradwinkelwerte 42, 46 erfassen. Auf eine konkrete Ausführung hierzu wird später anhand der Fig. 4 eingegangen.

Ist der übervolle Abtriebsradwinkelwert 52, 54 eines der beiden Abtriebsräder 32, 34 bekannt, kann über das Verhältnis zwischen dem entsprechenden Abtriebsraddurchmesser 36, 38 zum Antriebsraddurchmesser 30 auf den Lenkwellenwinkel 18 geschlossen werden, weil dieser über dieses Verhältnis proportional vom entsprechenden übervollen Abtriebsradwinkelwert 52, 54 abhängig ist.

Da in der Praxis aufgrund von Messfehlern bei der Erfassung der echten Abtriebsradwinkelwerte 42, 46 im Lenkwellenwinkel 18 Winkelsprünge auftreten können, auf die der Kürze halber nicht weiter eingegangen werden soll, kann aus dem zuvor bestimmten übervollen Abtriebsradwinkelwert 52, 54 zunächst die Anzahl an vollen Umdrehungen des entsprechenden Abtriebsrades 32, 34 bestimmt und auf diese der echte Abtriebsradwinkelwert 42, 46 aufaddiert werden. Hierzu wird zunächst der übervolle Abtriebswinkelwert 52, 54 eines der der beiden Abtriebsräder 32, 34 bestimmt und durch einen Vollwinkel von 360° geteilt. Dies ergibt einen normierten Rundenzählwert, der die Anzahl der gedrehten Umdrehung des entsprechenden Abtriebsrades 32, 34 auch zwischen zwei Vollwinkeln mit Nachkommastellen beschreibt. Von diesem Rundenzählwert werden durch Integer-Bildung alle Nachkommastellen abgeschnitten, wodurch die Anzahl an vollen Umdrehungen des entsprechenden Abtriebsrades 32, 34 als echter Rundzählwert bestimmt ist. Auf diesen echten Rundenzählwert wird dann der entsprechende echte Abtriebsradwinkelwert 42, 46 des entsprechenden Abtriebsrades 32, 34 aufaddiert, was ebenfalls zum übervollen Abtriebswinkelwert 52, 54 des entsprechenden Abtriebsrades 32, 34 führt, aus dem dann wiederum der Lenkwellenwinkel 18 bestimmt werden kann.

Grundsätzlich sollten dem so bestimmten Lenkwellenwinkel 18 keine Winkelsprünge mehr auftreten. In der Praxis zeigen sich dennoch Winkelsprünge. Der Grund dafür ist, dass der Lenkwellenwinkel 18 nicht nur von den beiden (mit Messfehlern erfassten) echten Abtriebsradwinkelwerten 42, 46 sondern auch von inneren Eigenschaften des Lenkwinkelsensors 24 abhängig ist, wie beispielsweise den Übersetzungsverhältnissen zwischen den einzelnen Rädern 28, 32, 34. Da diese inneren Eigenschaften Alterung und/oder Verschleiß unterliegen verändern sich diese und bringen ebenfalls Messfehler in die Erfassung des Lenkwellenwinkels 18 ein.

Diese Messfehler können jedoch durch Überwachen der inneren Eigenschaften des Lenkwinkelsensors 26 aufgedeckt und gegebenenfalls angezeigt werden.

Nachstehend soll eine Steuervorrichtung 58 anhand der Fig. 4 beschrieben werden, die das zuvor erläuterte Verfahren zum Bestimmen des Lenkwellenwinkels 18 ausführt und gleichzeitig die soeben erläuterte Überlegung zum Erkennen von Messfehlern aufgrund von Alterung und/oder Verschleiß umsetzt.

Die Steuervorrichtung 58 empfängt die beiden echten Abtriebsradwinkelwerte 42, 46 und bildet mit einem speziellen Subtrahierer 60 die Differenz 56. Aus den oben erläuterten Gründen darf hier kein normaler Subtrahierer verwendet werden, weil bei der Subtraktion der echten Abtriebsradwinkelwerte 42, 46 Sprünge auftreten, wenn die Abtriebsräder 32, 34 jeweils einen Vollwinkel 50 passieren.

Aus der Differenz 56 berechnet die Steuervorrichtung 58 dann parallel den ersten übervollen Abtriebsradwinkelwert 52 des ersten Abtriebsrades 32 und den zweiten übervollen Abtriebsradwinkelwert 54 des zweiten Abtriebsrades 34. Der oben erläuterte funktionale Zusammenhang zwischen der Differenz 56 und den beiden übervollen Abtriebsradwinkelwerten 52, 54 ist proportional. Der Proportionalitätsfaktor ist dabei eine totale Rundenzahl 62, 64, die sich das jeweilige Abtriebsrad 32, 34 zwischen zwei identischen relativen Stellungen der beiden Abtriebsräder 32, 34 zueinander dreht.

Zunächst soll die Berechnung des ersten übervollen Abtriebsradwinkelwertes 52 beschrieben werden. Um den ersten übervollen Abtriebsradwinkelwert 52 ungenau und mit Messfehlern behaftet zu bestimmen, multipliziert die Steuervorrichtung 58 die Differenz 56 in einem Multiplizierer 66 mit der ersten totalen Rundenzahl 62. Anschließend teilt die Steuervorrichtung 58 den ungenau bestimmten ersten übervollen Abtriebswinkelwert 52 durch 360° in einem Dividierer 68, um einen oben erwähnten ersten normierten Rundenzählwert 70 für das erste Abtriebsrad 32 zu bestimmen. In einem Integer-Glied 72 schneidet die Steuervorrichtung 58 dann die Nachkommastellen des ersten normierten Rundenzählwert 70 ab und berechnet so den ersten echten Rundenzählwert 74 des ersten Abtriebsrades 32. Dieser erste Rundenzählwert 74 multipliziert die Steuervorrichtung 58 dann in einem weiteren Multiplizierer 66 mit einem Vollwinkel von beispielsweise 360° und berechnet so den zuletzt passierten ersten Vollwinkel 76 des ersten Abtriebsrades 32. Auf diesen zuletzt passierten ersten Vollwinkel 76 addiert die Steuervorrichtung 58 dann mit einem Addierer 78 den ersten echten Abtriebsradwinkelwert 42 des ersten Abtriebsrades 32 und erhält so den genauen ersten übervollen Abtriebsradwinkelwert 52 des ersten Abtriebsrades 32. Zur Bestimmung des Lenkwellenwinkels 18 multipliziert die Steuervorrichtung 58 abschließend mit einem Multiplizierer 66 den ersten übervollen Abtriebsradwinkelwert 52 des ersten Abtriebsrades 32 und ein erstes Übersetzungsverhältnis 80 zwischen dem Antriebsrad 28 und dem ersten Abtriebsrad 32. Dieses erste Übersetzungsverhältnis 80 entspricht dem Verhältnis zwischen dem Antriebsraddurchmesser 30 und dem ersten Abtriebsraddurchmesser 36.

Nun soll die Berechnung des zweiten übervollen Abtriebsradwinkelwertes 54 beschrieben werden. Um den zweiten übervollen Abtriebsradwinkelwert 54 ungenau und mit Messfehlern behaftet zu bestimmen, multipliziert die Steuervorrichtung 58 die Differenz 56 in einem Multiplizierer 66 mit der zweiten totalen Rundenzahl 64. Anschließend teilt die Steuervorrichtung 58 den ungenau bestimmten zweiten übervollen Abtriebsradwinkelwert 52 durch 360° in einem Dividierer 68, um einen oben erwähnten zweiten normierten Rundenzählwert 84 für das zweite Abtriebsrad 34 zu bestimmen. In einem Integer-Glied 72 schneidet die Steuervorrichtung 58 dann die Nachkommastellen des zweiten normierten Rundenzählwertes 82 ab und berechnet so den zweiten echten Rundenzählwert 84 des zweiten Abtriebsrades 34. Diesen zweiten Rundenzahwertl 84 multipliziert die Steuervorrichtung 58 dann in einem weiteren Multiplizierer 66 mit einem Vollwinkel von beispielsweise 360° und berechnet so den zuletzt passierten zweiten Vollwinkel 86 des zweiten Abtriebsrades 34. Auf diesen zuletzt passierten zweiten Vollwinkel 86 addiert die Steuervorrichtung 58 dann mit einem Addierer 78 den zweiten echten Abtriebsradwinkelwert 46 des zweiten Abtriebsrades 34 und erhält so den genauen zweiten übervollen Abtriebsradwinkelwert 54 des zweiten Abtriebsrades 34. Eine redundante Bestimmung des Lenkwellenwinkel 18 ist zur Durchführung des Verfahrens in der Steuervorrichtung 58 nicht notwendig.

Die Steuervorrichtung 18 behandelt nun den ersten übervollen Abtriebsradwinkelwert 52 als Referenzwert für den Lenkwellenwinkel 18 und plausibilisiert diesen in einer Erkennungseinrichtung 88 basierend auf dem zweiten übervollen Abtriebsradwinkelwert 54.. Eine beispielhafte Ausgestaltung dieser Erkennungseinrichtung 88 wird nachstehend beschrieben.

Zunächst wandelt die Erkennungseinrichtung 88 in der Steuervorrichtung 58 den zweiten übervollen Abtriebsradwinkelwert 54 in einen Vergleichswert für den Referenzwert um. Dieser sollte im fehlerfreien Fall genauso groß sein, wie der erste übervolle Abtriebsradwinkelwert 52. Daher wird der Vergleichswert der Übersichtlichkeit halber mit dem Bezugszeichen 52' versehen.

Zur Bestimmung des Vergleichswertes 52' multipliziert die Erkennungseinrichtung 88 den zweiten übervollen Abtriebswinkelwert 54 mit einem Übersetzungsverhältnis 90 zwischen dem ersten Abtriebsrad 32 und dem zweiten Abtriebsrad 34. Auf diese Weise wird der zweite übervolle Abtriebsradwinkelwert 54 in den ersten übervollen Abtriebsradwinkelwert 52 umgerechnet. Wenn das Übersetzungsverhältnis zwischen den beiden Abtriebsrädern 32, 34 stimmt, dann stimmen auch die inneren Eigenschaften des Lenkwinkelsensors 24 und somit auch beispielsweise die totalen Rundenzahlen 62, 64 von denen die Steuervorrichtung 58 des Lenkwinkelsensors 24 bei der Bestimmung des Lenkwinkels 18 ausgeht. In einem derartigen Fall treten keine der oben genannten Winkelsprünge auf.

Zur Überprüfung, ob das Übersetzungsverhältnis zwischen den beiden Abtriebsrädern 32, 34 stimmt stellt die Erkennungseinrichtung 88 in der Steuervorrichtung 58 die den Referenzwert 54 und den Vergleichswert 54' durch Bilden einer Vergleichsdifferenz 92 mit einem Subtrahierer 93 gegenüber und überprüft in einer Überprüfungseinheit 94, ob die Vergleichsdifferenz 92 kleiner als eine vorbestimmte Schranke 95 ist. Wenn die Vergleichsdifferenz 92 diese Schranke 95 überschreitet, so kann die Überprüfungseinheit 94 ein Warnsignal 96 ausgeben, das dann zur Signalisierung beispielsweise für Wartungszwecke aus dem Lenkwinkelsensor 24 ausgegeben werden kann.

Alternativ oder zusätzlich kann die Vergleichsdifferenz 92 auch in einem Speicher 97 hinterlegt werden. Die gespeicherte Vergleichsdifferenz 92' kann dann beispielsweise zu Wartungszwecken aus diesem Speicher 97 abgerufen werden. Optional kann eine Schnittstelle dazu vorgesehen sein, eine bereits gespeicherte Vergleichsdifferenz 92' mit einer neu zu speichernden Vergleichsdifferenz 92 zu vergleichen und den Speichervorgang nur unter einer bestimmten Bedingung durchführen, beispielsweise wenn die gespeicherte Vergleichsdifferenz 92' kleiner ist, als die neu zu speichernde Vergleichsdifferenz 92.

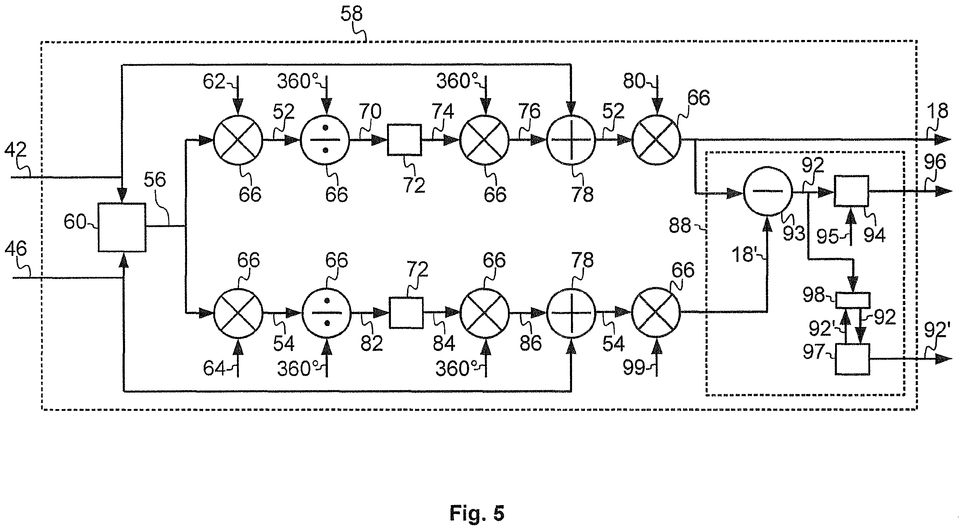

In der zuvor beschriebenen Ausführung werden der erste übervolle Abtriebsradwinkelwert 52 als Referenzwert für den Lenkwellenwinkel 18 und der zweite übervolle Abtriebsradwinkelwert 54 als Grundlage zur Bestimmung des Vergleichswertes in der Steuervorrichtung 58 verwendet. Alternativ hierzu könnten jedoch auch der Lenkwinkel 18 in der Steuervorrichtung 58 redundant bestimmt und in der Erkennungseinrichtung 88 auf Fehler hin überwacht werden. Dies ist in Fig. 5 beispielhaft angedeutet. Hierbei wird der zweite übervolle Abtriebsradwinkelwert 54 statt mit dem zweiten Übersetzungsverhältnis 90 mit einem dritten Übersetzungsverhältnis 99 multipliziert, das die Übersetzung zwischen dem zweiten Abtriebsrad 34 und dem Antriebsrad 28 beschreibt. Auf diese Weise wird unmittelbar ein redundanter Lenkwellenwinkel 18' ermittelt. Der Lenkwellenwinkel 18 könnte nun als Referenzwert und der redundante Lenkwellenwinkel 18' als Vergleichswert verwendet werden.

Die beiden Messaufnehmer 40, 42 können wie bereits erläutert als magnetische Messaufnehmer ausgebildet sein. Wenn die Messaufnehmer 40, 42 hierbei in AMR-Technik aufgebaut sind, kann der Lenkwinkelsensor 24 hinsichtlich seiner korrekten Funktionalität auch basierend auf der Orthogonalität der Gebersignale aus den Messaufnehmern 40, 42 hin überwacht werden. Diese Überwachung kann dann gemeinsam mit den Ausgangssignalen aus der Erkennungseinrichtung 88 verwendet werden um einen höheren Sicherheitsgrad beispielsweise nach ASIL-D zu erreichen.

## Patentansprüche

1. Verfahren zur Erkennung eines Fehlers (96) in einem Winkelsensor (24), der eingerichtet ist, die Winkellage (18) einer Welle (14) basierend auf einem Winkellagenunterschied (56) zwischen einem durch die Welle (14) angetriebenen ersten Abtriebsrad (32) und einem durch die Welle (14) angetriebenen zweiten Abtriebsrad (34) zu bestimmen, die sich in ihrem Durchmesser (34, 36) unterscheiden, umfassend:
- Bestimmen eines Referenzwertes (18, 52) für die Winkellage (18) der Welle (14) basierend auf dem Winkellagenunterschied (56) und der Winkellage (42) des ersten Abtriebsrades (32),
- Bestimmen eines Vergleichswertes (18', 52') für die Winkellage (18) der Welle (14) basierend auf dem Winkellagenunterschied (56) und der Winkellage (46) des zweiten Abtriebsrades (34) und einem Übersetzungsverhältnis (90) zwischen dem ersten Abtriebsrad (32) und dem zweiten Abtriebsrad (34), und
- Erkennen des Fehlers (96) wenn eine Gegenüberstellung (93, 94) des Referenzwertes (18, 52) und des Vergleichswertes (18', 52') eine vorbestimmte Bedingung (95) erfüllt.

2. Verfahren nach Anspruch 1, wobei zum Bestimmen des Referenzwertes (18, 52) ein basierend auf dem Winkellagenunterschied (56) bestimmter Rundenzählwert (76) für das erste Abtriebsrad (32) und die Winkellage (42) des ersten Abtriebsrades (32) addiert werden.

3. Verfahren nach Anspruch 1 oder 2, wobei zum Bestimmen des Vergleichswertes (18', 52') eine Summe (78) aus einem basierend auf dem Winkellagenunterschied (56) bestimmten Rundenzählwert (86) für das zweite Abtriebsrad (34) und der Winkellage (46) des zweiten Abtriebsrades (34) durch Gewichten (66) mit dem Übersetzungsverhältnis (90) ein redundanter Referenzwert (52') gebildet wird.

4. Verfahren nach einem der vorstehenden Ansprüche, wobei die Gegenüberstellung (93, 94) die Bildung einer Differenz (92) zwischen dem Referenzwert (18, 52) und dem Vergleichswert (18', 52') umfasst, und wobei die vorbestimmte Bedingung (95) erfüllt ist, wenn die gebildete Differenz (92) einen vorbestimmten Wertebereich (95) verlässt.

5. Verfahren nach Anspruch 4, umfassend Speichern der gebildeten Differenz (92) in einem Speicher (97).

6. Verfahren nach Anspruch 5, wobei die Differenz (92) nur dann in dem Speicher gespeichert wird, wenn ein Betrag einer im Speicher (97) hinterlegten Differenz (92') kleiner ist, als ein Betrag der gebildeten Differenz (92).

7. Verfahren nach einem der vorstehenden Ansprüche, wobei die Winkellagen (42, 46) der Abtriebsräder (32, 34) mit magnetoresitiven Sensoren (40, 44) erfasst werden, und wobei der Fehler (96) des Winkelsensors (24) ferner basierend auf einer Orthogonalität der die Winkellagen (42, 46) beschreibenden Ausgangssignale der magnetoresistiven Sensoren (40, 44) erfasst wird.

8. Steuervorrichtung (58), die eingerichtet ist, ein Verfahren nach einem der vorstehenden Ansprüche durchzuführen.

9. Winkelsensor (24) zur Bestimmung der Winkellage (42, 46) einer Welle (14) basierend auf einem Winkellagenunterschied (56) zwischen einem durch die Welle (14) angetriebenen ersten Abtriebsrad (32) und einem durch die Welle (14) angetriebenen zweiten Abtriebsrad (34), umfassend das erste Abtriebsrad (32), das zweite Abtriebsrad (34) mit einem Durchmesser (38) der sich von einem Durchmesser (36) des ersten Abtriebsrades (32) unterscheidet, und einer Steuervorrichtung (58) nach Anspruch 8.

10. Computerprogramm umfassend Programmcodemittel, um alle Schritte eines Verfahrens nach einem der Ansprüche 1 bis 7 durchzuführen, wenn das Computerprogramm auf der Steuervorrichtung (58) nach Anspruch 8 ausgeführt wird.

## Claims

1. Method of detecting an error (96) in an angle sensor (24) adapted to determine the angular position (18) of a shaft (14) based on an angular position difference (56) between a first output gear (32) driven by the shaft (14) and a second output gear (34) driven by the shaft (14) that differ in diameter (34, 36), comprising:
Determining a reference value (18, 52) for the angular position (18) of the shaft (14) based on the angular position difference (56) and the angular position (42) of the first output gear (32),
determining a comparison value (18', 52') for the angular position (18) of the shaft (14) based on the angular position difference (56) and the angular position (46) of the second output gear (34) and a transmission ratio (90) between the first output gear (32) and the second output gear (34), and
detecting the error (96) when a comparison (93, 94) of the reference value (18, 52) and the comparison value (18', 52') satisfies a predetermined condition (95).

2. Method according to claim 1 , wherein for determining the reference value (18, 52) a lap count value (76) for the first output wheel (32) determined based on the angular position difference (56) and the angular position (42) of the first output wheel (32) are added.

3. Method according to claim 1 or 2, wherein for determining the comparison value (18', 52') a sum (78) of a lap count value (86) determined based on the angular position difference (56) for the second output wheel (34) and the angular position (46) of the second output wheel (34) is formed by weighting (66) with the transmission ratio (90) a redundant reference value (52').

4. Method according to any one of the preceding claims, wherein the comparison (93, 94) comprises forming a difference (92) between the reference value (18, 52) and the comparison value (18', 52'), and wherein the predetermined condition (95) is satisfied when the formed difference (92) extends a predetermined range of values (95).

5. Method according to claim 4, comprising storing the formed difference (92) in a memory (97).

6. Method according to claim 5, wherein the difference (92) is stored in the memory only if an amount of a difference (92') stored in the memory (97) is smaller than an amount of the formed difference (92).

7. method according to any one of the preceding claims, wherein the angular positions (42, 46) of the driven wheels (32, 34) are detected by magnetoresistive sensors (40, 44), and wherein the error (96) of the angle sensor (24) is further detected based on an orthogonality of the output signals of the magnetoresistive sensors (40, 44) describing the angular positions (42, 46).

8. control apparatus (58) adapted to perform a method according to any one of the preceding claims.

9. angle sensor (24) for determining the angular position (42, 46) of a shaft (14) based on an angular position difference (56) between a first output gear (32) driven by the shaft (14) and a second output gear (34) driven by the shaft (14), comprising the first output gear (32), the second output gear (34) having a diameter (38) different from a diameter (36) of the first output gear (32), and a control device (58) according to claim 8.

10. a computer program comprising program code means to perform all steps of a method according to any one of claims 1 to 7, when the computer program is executed on the control device (58) according to claim 8.

## Revendications

1. Procédé de détection d'un défaut (96) dans un capteur d'angle (24) agencé pour déterminer la position angulaire (18) d'un arbre (14) sur la base d'une différence de position angulaire (56) entre un premier engrenage de sortie (32) entraîné par l'arbre (14) et un second engrenage de sortie (34) entraîné par l'arbre (14) qui diffèrent en diamètre (34, 36), comprenant :
Déterminer une valeur de référence (18, 52) pour la position angulaire (18) de l'arbre (14) sur la base de la différence de position angulaire (56) et de la position angulaire (42) de la première roue de sortie (32),
déterminer une valeur de comparaison (18', 52') pour la position angulaire (18) de l'arbre (14) sur la base de la différence de position angulaire (56) et de la position angulaire (46) du second engrenage de sortie (34) et d'un rapport de transmission (90) entre le premier engrenage de sortie (32) et le second engrenage de sortie (34) ; et
détecter l'erreur (96) lorsqu'une comparaison (93, 94) de la valeur de référence (18, 52) et de la valeur de comparaison (18', 52') satisfait à une condition prédéterminée (95).

2. Procédé selon la revendication 1 , dans lequel, pour déterminer la valeur de référence (18, 52), on ajoute une valeur de comptage de tours (76) pour la première roue de sortie (32) déterminée sur la base de la différence de position angulaire (56) et de la position angulaire (42) de la première roue de sortie (32).

3. procédé selon la revendication 1 ou 2, dans lequel pour déterminer la valeur de comparaison (18', 52'), une somme (78) d'une valeur de comptage de tours (86) déterminée sur la base de la différence de position angulaire (56) pour la deuxième roue de sortie (34) et de la position angulaire (46) de la deuxième roue de sortie (34) est formée en pondérant (66) avec le rapport de transmission (90) une valeur de référence redondante (52').

4. procédé selon l'une quelconque des revendications précédentes, dans lequel la comparaison (93, 94) comprend la formation d'une différence (92) entre la valeur de référence (18, 52) et la valeur de comparaison (18', 52'), et dans lequel la condition prédéterminée (95) est satisfaite lorsque la différence formée (92) s'étend sur une plage prédéterminée de valeurs (95).

5. procédé selon la revendication 4, comprenant le stockage de la différence formée (92) dans une mémoire (97).

6. procédé selon la revendication 5, dans lequel la différence (92) est stockée dans la mémoire uniquement si une quantité d'une différence (92') stockée dans la mémoire (97) est inférieure à une quantité de la différence formée (92).

7. Procédé selon l'une quelconque des revendications précédentes, dans lequel les positions angulaires (42, 46) des roues motrices (32, 34) sont détectées par des capteurs magnétorésistifs (40, 44), et dans lequel l'erreur (96) du capteur d'angle (24) est en outre détectée sur la base d'une orthogonalité des signaux de sortie des capteurs magnétorésistifs (40, 44) décrivant les positions angulaires (42, 46).

8. Dispositif de commande (58) adapté pour mettre en œuvre un procédé selon l'une quelconque des revendications précédentes.

9. Capteur angulaire (24) pour déterminer la position angulaire (42, 46) d'un arbre (14) sur la base d'une différence de position angulaire (56) entre un premier engrenage de sortie (32) entra né par l'arbre (14) et un second engrenage de sortie (34) entra né par l'arbre (14), comprenant le premier engrenage de sortie (32), le second engrenage de sortie (34) ayant un diamètre (38) différent d'un diamètre (36) du premier engrenage de sortie (32), et un dispositif de commande (58) selon la revendication 8.

10. Programme informatique comprenant des moyens de code de programme pour réaliser toutes les étapes d'un procédé selon l'une quelconque des revendications 1 à 7, lorsque le programme informatique est exécuté sur le dispositif de commande (58) selon la revendication 8.
